# EUROPEAN PATENT APPLICATION

(11) **EP 4 749 621 A1**
(43) Date of publication of application: **27.05.2026**
(21) Application number: 25215282.2
(22) Date of filing: 12.11.2025
(51) Int. Cl.: G11B 27/031, G11B 27/34

(54) **SYSTEM FOR PROVIDING PERSONALIZED MUSIC SHARING**

(30) Priority: 25.11.2024 US 202418958178
(71) Applicant: Harman International Industries, Incorporated, Stamford, Connecticut 06901 (US)
(72) Inventor: LUCZKIEWICZ, Brian Joseph, Armonk, NY, 10504 (US); DULAI, Dharmender, Bedford, NY, 10506 (US)
(74) Representative: Kraus & Lederer PartGmbB

(57) **Abstract**

A computing device includes a display; and at least one processor programmed to transmit a multimedia signal including one or more of audio and video data for output via one or more of a loudspeaker and the display; receive a first user input via on a first interface of the display, the first user input being indicative of a user selection to create personalized content including a start position and an end position corresponding to a portion of the multimedia signal; present at least one attribute of the personalized content on a second interface for selection by a user; and associate the at least one attribute to the personalized content of the multimedia signal to provide a desired attribute in response to a second user input being received at the second interface, the second user input being indicative of selecting at the at least one attribute.

## Description

### TECHNICAL FIELD

The present disclosure generally relates to a system and method for creating and sharing multimedia content. More specifically, the present disclosure relates to a system and method for creating and sharing personalized multimedia content experience based on users' preferences.

### BACKGROUND

Many consumers use smart devices (e.g., smart phones) to play media content such as music. The music may be downloaded from the Internet in digital formats and played out via one or more loudspeakers or headphones connected to the smart devices. Different music platforms may provide various level of interactions and engagements between the user and the music. Conventionally, the users may download or stream the music data from the Internet and play the entire song from the beginning to the end with only limited interactions such as play/pause, seeking with the track. Modern online platforms may allow the user to interact and engage with the song being played for more personalized experience. For instance, the users may save the songs as favorite. The user may further share the song to a friend via social media.

### SUMMARY

In one or more exemplary embodiments of the present disclosure, a computing device includes a display; and at least one processor programmed to transmit a multimedia signal including one or more of audio and video data for output via one or more of a loudspeaker and the display; receive a first user input via on a first interface of the display, the first user input being indicative of a user selection to create personalized content including a start position and an end position corresponding to a portion of the multimedia signal; present at least one attribute of the personalized content on a second interface for selection by a user; associate the at least one attribute to the personalized content of the multimedia signal to provide a desired attribute in response to a second user input being received at the second interface, the second user input being indicative of selecting at the at least one attribute; and share the desired attribute and the personalized content to another computing device that is separate from the computing device for playback thereof.

A method includes transmitting a multimedia signal including one or more of audio and video data for output via one or more of a loudspeaker and a display; receiving a first user input via on a first interface of the display, the first user input being indicative of a user selection to create personalized content including a start position and an end position corresponding to a portion of the multimedia signal; presenting a plurality of attributes of the personalized content on a second interface for selection by a user; associating the plurality of attribute to the personalized content of the multimedia signal to provide a desired attribute in response to at least one of the first user input being received at the first interface, and a second user input being received at the second interface; and sharing the desired attribute and the personalized content to an entity for playback thereof.

A non-transitory computer-readable medium comprising instructions, when executed by one or more processors of a computing device, cause the computing device to: transmit a multimedia signal including video data for output via a display; receive a first user input via on a first interface of the display, the first user input being indicative of a user selection to create personalized content; present at least one attribute of the personalized content on a second interface for selection by a user; associate the at least one attribute to the personalized content of the multimedia signal to provide a desired attribute in response to a second user input being received at the second interface, the second user input being indicative of selecting at the at least one attribute; and share the desired attribute and the personalized content to another computing device that is separate from the computing device for output thereof.

### BRIEF DESCRIPTION OF THE DRAWINGS

For a better understanding of the invention and to show how it may be performed, embodiments thereof will now be described, by way of non-limiting example only, with reference to the accompanying drawings, in which:
Figure 1 illustrates an example block topology of a smart device system of one embodiment of the present disclosure.
Figures 2A and 2B illustrate interfaces for allowing a user to create and share a personalized content of one embodiment of the present disclosure.
Figure 3 illustrates a flow diagram of a process for creating and sharing a personalized content of one embodiment of the present disclosure.
Figures 4A, 4B and 4C illustrate interfaces for a user to search, listen and create a personalized content of one embodiment of the present disclosure.
Figures 5A, 5B and 5C illustrate interfaces for a user to receive and consume recommended content.
Figure 6 illustrates an interface for a user to interact with multi-medium content.

### DETAILED DESCRIPTION

Embodiments are described herein. It is to be understood, however, that the disclosed embodiments are merely examples and other embodiments may take various and alternative forms. The figures are not necessarily to scale. Some features could be exaggerated or minimized to show details of particular components. Therefore, specific structural and functional details disclosed herein are not to be interpreted as limiting, but merely as a representative basis for teaching one skilled in the art.

Various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Conventionally, when a music listener wants to share an audio (e.g., a song) to a friend via communication applications and/or social media, the entire audio soundtrack is shared with the friend as a receiving party. The sharing may include point-to-point sharing and one-to-many sharing. The receiving party may need to play the entire soundtrack to experience the audio which may take a long time. The receiving party may be less likely to accept the sharing and listen to the audio when the soundtrack is long. Further, when the audio is shared, it may be unclear for the receiving party what characteristic is attractive to the sender. The confusion may further frustrate the receiving party to listen to the shared audio. Indeed, the conventional methods in which users listen and share music provide little opportunity for the users to interact and engage with the music. Further, the conventional methods are not customized to the users' personal preferences. With the above issues in mind, the present disclosure purposes, among other things, a system and method for providing a user with personalized content creating and sharing based on the user's personalized preferences.

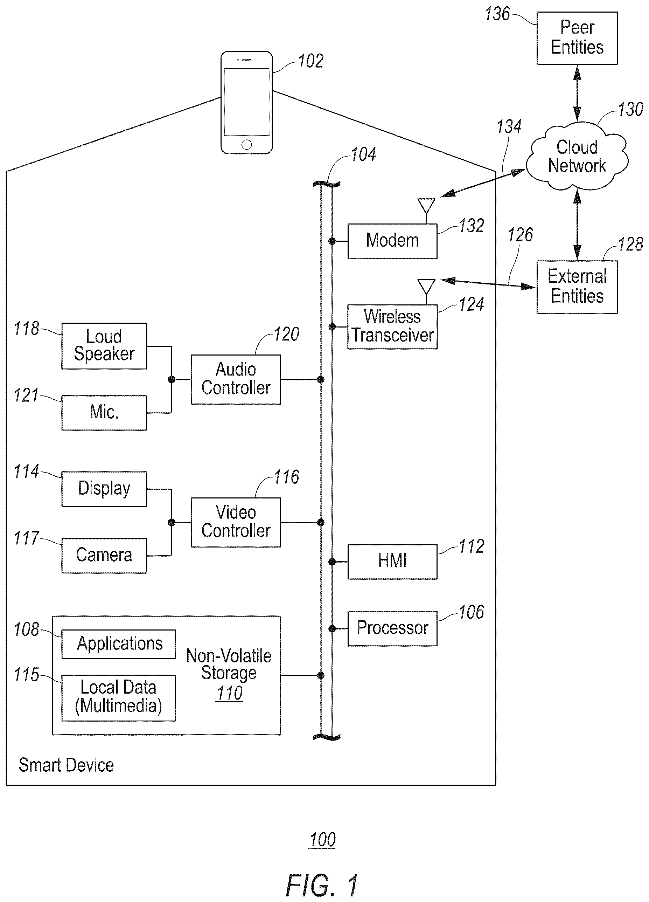

Referring to Figure 1, an example block topology of a system 100 of one embodiment of the present disclosure is illustrated. A smart device 102 may include various types of digital devices provided with data processing and communicating capabilities to perform various functions. The smart device 102 may be any of various types of portable and/or stationary computing devices. For instance, the smart device 102 may include a cellular phone, a tablet computer, a wearable device, a smart watch, laptop computers, portable music players, or the like. Additionally, the smart device 102 may further include a desktop computer, a home loudspeaker, an infotainment system of a vehicle, a home appliance integrated with digital interactive functions (e.g., TV), or other device capable of processing and communicating data. For instance, a refrigerator may be provided with touch screen display for user interaction. The user may use the touch screen to command an integrated loudspeaker and/or external loudspeaker to output audio. It should be noted that the illustrated system 100 is merely an example, and more, fewer, and/or differently located elements may be used.

As illustrated in Figure 1, the smart device 102 may be provided with various components including one or more processors 106 configured to perform instructions, commands, and other routines in support of the processes described herein. For instance, the smart device 102 may be configured to execute instructions of applications 108 to provide features such as multimedia output (e.g., music playback), telecommunications, user interactions or the like. Such instructions and other data may be maintained in a non-volatile manner using a variety of types of computer-readable storage medium 110. The computer-readable medium 110 (also referred to as a processor-readable medium or storage) includes any non-transitory medium that participates in providing instructions or other data that may be read by the processor 106 of the smart device 102. Computer-executable instructions may be compiled or interpreted from computer programs created using a variety of current and future programming languages and/or technologies.

The smart device 102 may be provided with one or more system buses or in-device networks 104 (hereafter "the system bus 104") configured to enable the communication between various components of the smart device 102. The system bus 104 may be configured to support various existing and/or future communication protocols.

The smart device 102 may be provided with various features allowing the user to interface with the smart device 102. For example, the smart device 102 may receive input from human machine interface (HMI) controls 112 connected to the system bus 104 and configured to provide for user interaction with the smart device 102. As an example, the smart device 102 may interface with one or more buttons, switches, touch screens, voice controls, or other HMI controls configured to invoke functions on the smart device 102 such as audio/video playback. The audio/video files may be locally stored in the storage 110 as a part of local data 115. Additionally or alternatively, the audio/video files may be remotely streamed from a cloud network (e.g., the Internet).

The smart device 102 may be operably coupled with one or more displays 114 configured to provide visual output to user by way of a video controller 116 through the system bus 104. In some cases, the display 114 may be a touch screen further configured to receive user touch input via the video controller 116, while in other cases the display 114 may be a display only, without touch input capabilities. The video controller 116may also be operably coupled with one or more cameras 117 configured to provide video input by way of the video controller 116 through the system bus 104. The cameras 117 may be configured to enable various functions such as facial recognitions and eye tracking. For instance, the cameras 117 may measures eye movement and gaze point of the user such that the smart device 102 may determine where the user is looking at on the display 114.

The smart device 102 may also be operably coupled with one or more loudspeakers 118 configured to provide audio output to user by way of an audio controller 120 connected to the system bus 104. The loudspeakers 118 may also include headphones in one or more examples. The audio controller 120 may also be operably coupled with one or more microphones 121 configured to capture audio input by way of the audio controller 120.

The smart device 102 may also be provided with wireless communication capabilities via a wireless transceiver 124 connected to the system bus 104 and configured to wirelessly communicate with one or more external entities 128 via a wireless connection 126. The external entities 128 may include various computing devices provided with data processing and communicating capabilities. In one example, the external entities 128 may include a peer smart device associated with same user of the smart device 128. The smart device 102 may communicate with the external entities 128 via network protocols and share digital data therebetween. Additionally or alternatively, the external entities 128 may include one or more wireless routers and/or access points (e.g., Wi-Fi router) configured to facilitate the data communication between the smart device and a cloud network (e.g., Internet). Additionally or alternatively, the external entities 128 may include one or more audio output devices such as headphones, earplugs or the like configured to output audio sounds using signals transmitted by the wireless transceiver 124. The wireless transceiver 124 may be configured to support a variety of wireless communication protocols including Wi-Fi, Bluetooth, radio-frequency identification (RFID), near-field communication (NFC), and communicate with a compatible wireless transceiver (not shown) of the external entities 128 to enable the wireless connection.

The smart device 102 may also be provided with a modem 132 connected to the system bus 104 and configured to control telecommunication between smart device 102 and a cloud network 130 through a wireless connection 134 in addition to or in lieu of via the external entities 128 (e.g., a router). For instance, the smart device 102 may download and/or upload data from/to the cloud network 130 via the modem 132 or through the external entities 128. Additionally, the smart device 102 may access the one or more external entities 128 via the cloud network 130 in lieu of using the wireless transceiver 124 in cases that the external entities 128 are remote from the smart device 102 and the wireless connection 126 is unavailable. It is noted that the term cloud network is used as a general term in the present disclosure and may include any computing network involving servers, carriers, routers, computers, controllers, circuitry, or the like configured to store data and perform data processing functions and facilitate communication between various entities.

The smart device 102 may be configured to communicate with one or more remotely located peer entities 136 via the cloud network 130. The peer entities 136 may include one or more devices associated with another user (e.g., a friend). For instance, the user of the smart device 102 may be associated with one or more other users of the peer entities 136 via social media and they can communicate and exchange multimedia information via the respective devices 102, 136. The peer entities 136 may include various hardware devices in combination with software applications and provided with data processing and communication capabilities. Similar to the smart device 102, the peer entities 136 may include a cellular phone, a tablet computer, a wearable device, a smart watch, laptop computers, portable music players, or the like.

Utilizing the various components as described above, the smart device 102 may be configured to perform various operations. For instance, the smart device 102 may be configured to output multimedia content such as an audio soundtrack via the one or more loudspeakers 118 and/or via the one or more external entities 128 (e.g., headphone). The smart device 102 may further provide an interface configured to allow the user to interact with the with the multimedia content via the HMI controls 112 to improve the user experience. For instance, the user may provide user input to operate the multimedia content via the touch screen display 114. The user input may be indicative of various operations appliable to the multimedia content. As a few non-limiting examples, the user input may include one or more search terms/conditions to allow the user to find the desired multimedia content such as a song or video. While the multimedia content is being played, the user input may include one or more commands to adjust the playback such as fast forward, pause or the like. The user input may further include indication that the user intends to share the entire or a portion of the multimedia content to another user (e.g., a friend on the social network).

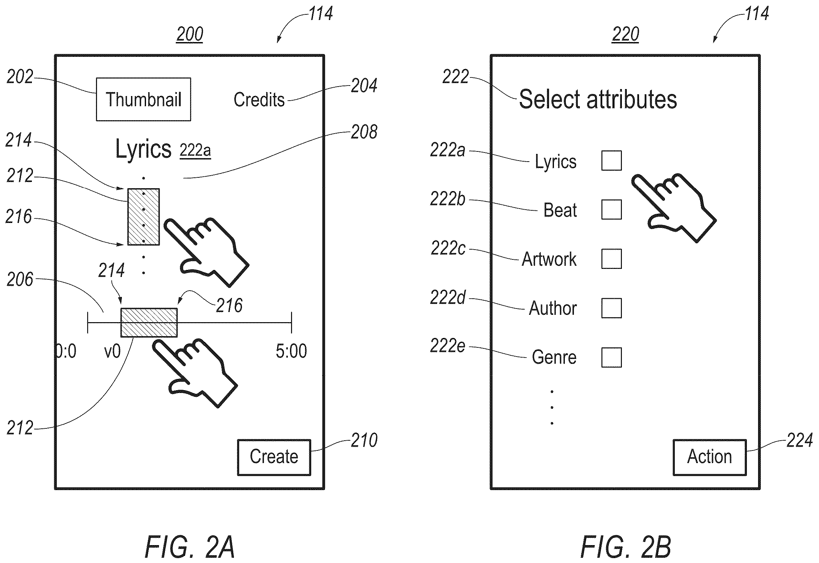

Referring to Figures 2A and 2B, software interfaces for allowing the user to create and share personalized contents of one embodiment of the present disclosure are illustrated. With continuing reference to Figure 1, the interfaces may be implemented via the touch screen display 114 facilitated by the HMI controls 112 of the smart device 102.

Figure 2A illustrates a first interface 200 configured to interact with the user for creating a personalized content. In the present example, the smart device 102 is being used to play multimedia signal (e.g., audio or video soundtrack) having a total length of proximately five minutes. The interface 200 may display a plurality of contents that correspond to the playback progress of the audio soundtrack. More specifically, the interface 200 may include a thumbnail artwork image 202 as a representation of an album or the induvial soundtrack being played. The interface 200 may further include a credit section indicating the contributions of people who worked on the album or soundtrack, including musicians, producers, or the like.

The interface 200 may further include a time axis 206 presented horizontally and configured to indicate the progress of the playback. The time axis 206 may be a time slider configured to allow the adjust the time of the soundtrack being played by sliding on the time axis 206 back and forth. As illustrated in Figure 2A, the time axis 206 displays the entire length (e.g., five minutes) of the current soundtrack. Alternatively, the time axis 206 may be a zoomed in to only display a period of time centered around the current portion of the soundtrack being played.

In cases that the soundtrack is a song having lyrics, the interface 200 may further include a lyrics section 208 displaying the lyrics of the song in text form. The lyrics section 208 may display the lyrics text in a rolling manner. For instance, the portion of the lyrics corresponding to the current portion of the song being played may be highlighted and displayed on the top, and rolled up from the screen upon the time for the next line of lyrics has arrived. The user may slide the lyrics section 208 up and down to view the prior and future lyrics text.

The first interface 200 may further include one or more buttons configured to trigger various operations related to the soundtrack being played. In the present example, the interface 200 may include a create button 210 configured to trigger operations that allows the user to create a personalized content based on the soundtrack being played. Depending on the user's personal preferences, the soundtrack may have one or more desired attributes/characteristics attractive to the user to create the personalized content. For instance, if the user is attracted to part of the lyrics of the song, he/she may select the corresponding lyrics text in the lyrics section 208 by drawing a rectangle box 212 corresponding to the attracted part via the touch screen display 114 to identify the desired attribute (e.g., the lyrics). Additionally or alternatively, the user may box-select the attracted portion of the song by drawing the box 212 directly on the time axis 206 to identify the desired attribute. Additionally or alternative, the user may select the thumbnail image 202 by tapping on the image to indicate his/her attraction to the image artwork as the desired attribute. Additionally or alternatively, the user may tap and select the one or more names in the credits list 204 to indicate his/her attraction to contributing artists as the desired attribute. As illustrated in Figure 2A, the rectangle box 212 indicative of the personalized content may include a starting position 214 and an end position 216. The starting position 214 and the end position 216 define the duration of the personalized content.

In actions, there may be multiple ways the user can trigger the content creation function. For instance, the user may first tap the create button 210 once to enter the content create mode. The user may then make inputs by box selecting or tapping via the interface 200 to select the desired content. In one example, the creation mode interface 200 may be configured to only allow the user to make one of the inputs described above to keep the process simple. E.g., the user may either make the input to either lyrics section 208, or the time axis 206, but not both. In an alternative example, the first interface 200 may be configured to allow the user to make multiple inputs described above. E.g., the user may select the lyrics in addition to other selections such as the credits. Once the user is done with the content selection, the user may tap the create button 210 again to continue to content creation process.

Figure 2B illustrates a second interface 220 following the first interface 200 in the content create mode. The second interface 220 may provide the user with options to indicate what attributes of the previously selected content that is attractive to the user. For instance, the attribute options 222 may be presented in the checkbox form to allow the user to make manual selections. The attribute may be indicative of one or more characteristics associated with the content. As a few non-limiting examples, the attribute options 222 may include lyrics 222a, beat 222b, artwork 222c, author 222d, genre 222e or the like. The options illustrated in Figure 2B are not intended to limit the scope of the disclosure. More options may be provided by the second interface 220 under essentially the same concept. For example, options may be provided for allowing the user to choose different elements for different periods of time in the recording. Additionally, options including user generated content (photos, stickers, text, or the like) may be provided. Additionally, the attribute options 222 may further include attributes that are user supplied and/or dynamically generated. For instance, the attribute options may further include one or more user supplied images, user supplied videos, and/or graphics/contents created by generative artificial intelligence (AI).

Additionally or alternatively, the smart device 102 may automatically preselect one or more attribute options based on the user input previously made on the first interface 200. For instance, if the user created the content by selecting the lyrics section 208 suggesting the user is interested in the lyrics of the song, the lyrics option in the attribute options 222 may be automatically selected on the second interface 220. Additionally or alternatively, the smart device 102 may be provided with analytic functions to analyze the recognize the attributes of the selected portion of the music. If the user selected portion of the music soundtrack is recognized to be strong and/or unique in beat, the beat option in the attribute options 222 may be automatically selected on the second interface 220. Additionally or alternatively, if the user created the content by selecting the thumbnail artwork 202, the artwork option in the attribute options 222 may be automatically selected on the second interface 220. Additionally or alternatively, if the user created the content by selecting one or more of the credits, the corresponding credit option (e.g., the author) in the attribute options 222 may be automatically selected on the second interface 220. Additionally or alternatively, the smart device 102 may further utilize data received from one or more components to further determine the attracted attributes. As discussed above, the cameras 117 may be provided with eye tracking functions such that the smart device 102 may determine where on the display 114 the user is looking at when the content was created. For instance, if the smart device 102 determines the user was looking at one of the credits when the box select is received via the time axis 206, the corresponding name of the credits may be preselected. The user may be allowed to unselect any preselected options via the second interface 220.

Once the user has completed the attributes selection, the user may tap on one or more action buttons 224 to select further actions to be performed to the newly created personalized content. There are many operations that the user may perform to the newly created content. For instance, the user may share the newly created content with a friend and invite the friend to experience the content. The smart device 102 may transmit the newly created content to the peer entity 136 associated with the friend via the cloud network 130. Alternatively, the user may prefer not to share the newly created content at his stage, but to save it for future use. In this case, the smart device 102 may save the content in storage 110 as a part of the local data 115. Additionally or alternatively, the smart device 102 may save the content remotely to a cloud server associated with cloud network 130. Alternatively, the user may share the newly created content, not to a friend, but to him/herself for experiencing the content via another associated device. For instance, if the user created the content using a smart phone device 102, he/she may want to experience the content via a TV with stereo loudspeaker as a part of the external entities 128. The content may be shared locally to the designated external entities 128.

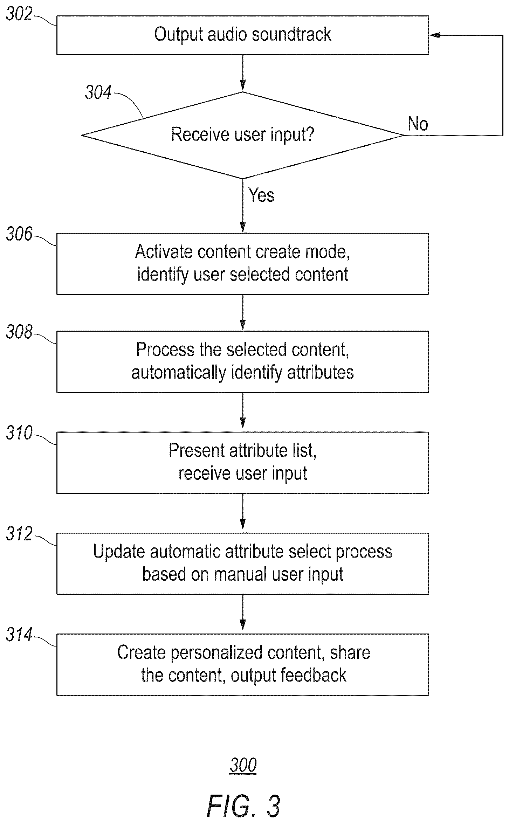

Referring to Figure 3, an example flow diagram of a process 300 for creating and sharing a personalized content of one embodiment of the present disclosure is illustrated. With continuing reference to Figures 1 and 2, the process 300 may be implemented via one or more components of the smart device 102.

At operation 302, the smart device 102 outputs a multimedia soundtrack via one or more sound output devices in response to a user input indicative of a user intent to listen the soundtrack. The user input may be received by the smart device 102 in various manners. For instance, the user may use the touch screen display 114 to search for the soundtrack. Additionally or alternatively, the smart device 102 may receive a user voice command via the microphone 121 and play the soundtrack accordingly. For instance, the user voice command may include phrases such as "play singer A's latest song." In response, the smart device 102 may perform a search of the local data and/or via the cloud network 130 accordingly and start playing the corresponding soundtrack responsive finding a match. As discussed above, the audio sounds may be output via a variety of components associated with the smart device 102. The soundtrack may be output via the one or more loudspeakers 118 integrated with the smart device 102. Additionally or alternatively, the soundtrack may be output via a headphone as one of the external entities 128 connected to the smart device 102. While the audio soundtrack is being output, visual information corresponding to the audio soundtrack may be displayed via the interface 200 through applicable hardware devices such as the display 114.

At operation 304, the smart device 102 verifies if a user input indicative of a user intent to create a personalized content based on the audio soundtrack currently being output has been received. If the answer is no, the process returns to operation 302 and the smart device 102 continues to output the audio soundtrack. If the answer is yes, the process proceeds to option 306. As discussed above, the user input may be received via the interface 200 through activation of the create button 210. Alternatively, the smart device 102 may detect the user input without an explicit activation of the create button 210. Instead, responsive to detecting a user action selecting a portion of the user interface (e.g., drawing a box 212 on the time axis 206), the smart device 102 may interpret the user action as the input indicative of the intent to create the personalized content.

Responsive to receiving the user input, at operation 306, the smart device 102 activates the content create mode and identify one or more user selected content. As discussed above with reference to Figure 2A, the user may select one or more content via the interface 200 in various manner such as tapping on one or more items (e.g., the thumbnail artwork), and/or box selecting the lyrics 208 and/or a timeframe 206. Once the user has completed the selection, he/she may complete the selection process by making an input to the first user interface 200 (e.g., by tapping the create button 210).

At operation 308, prior to switching to the second interface 220, the smart device 102 processes the user selected content and automatically identifies one or more attributes associated with the user selections. Although the smart device 102 may provide the user with manual selection for attribute options via the second interface 220, one or more attribute options may be automatically preselected to improve the user experience. The smart device 102 may automatically preselect one or more attribute options based on various factors. The smart device 102 may automatically select one or more attribute options that correspond to the specific portion of the content that user selected via the first interface 200. For instance, responsive to the user box selecting the lyrics 212, the smart device 102 may automatically determine the user is attracted to the lyrics of the audio soundtrack and automatically preselect the lyrics attribute option.

Additionally or alternatively, the smart device 102 may be configured to analyze the selected portion of the soundtrack and determine the one or more attributes based on the user's prior content creation history. More specifically, if the smart device 102 may perform analysis to determine if the selected portion has any commonality with one or more previously created personalized content by the user. In a non-limiting example, if the part of the content selected by the user includes a tone performed by guitar solo, and the user has previously created personalized content including guitar solo as an attractive attribute, the smart device 102 may identify guitar solo as one of the attractive attributes and automatically select the corresponding option.

Additionally or alternatively, the smart device 102 may be further configured to preselect one or more attributes based on sensor data such as eye tracking data via the one or more cameras 117.

At operation 310, the smart device 102 presents the attribute list 222 to the user via the second interface 220 to allow the user to manually select and unselect one or more options.

Responsive to the user completing the attributes selection (e.g., by tapping the action button 224), the process proceeds to operation 312, and the smart device 102 updates the automatic attribute selection process for further content creations. The automatic attribute identification and selection process is aimed to minimize the manual operations performed by the user such that the user experience may be improved. Ideally, the smart device may be able to accurately determine the attractive attributes from the attribute options 222 without requiring the user to manually select the options. Although there are multiple ways for the smart device to automatically identify the attractive attributes when creating personalized content, the automatic process may be inaccurate, and thus it is beneficial to continuously update the process to improve the accuracy. The smart device 102 may update the automatic process by comparing the automatically selected attributes with the user's manual input. Continuing with the above lyric box select example, the smart device may automatically select the lyrics option based on the user selecting the lyrics. However, responsive to detecting user repeatedly unselecting the lyrics option via the second interface 220, the smart device 102 may determine that user is not attracted to the lyrics of the audio soundtrack, but habitually uses the lyrics portion to create the personalized content. In this case, the smart device 102 may refrain from automatically selecting the lyrics next time when the user creates a personalized content.

At operation 314, the smart device 102 finalizes the personalized content creation, and performs operations to output the newly created personalized content. As discussed above, the personalized content may be output in various manners. In one example, the smart device 102 may save the personalized content in the storage 110 as a part of the local data for future reference. The user may load and play one or more of the personalized contents previously created via the smart device 102. In an alternative example, the smart device 102 may share the personalized content with one or more external entities 128 for output. In a further alternative example, the smart device 102 may share the personalized content to one or more of the peer entities (e.g., associated with a friend of the user; or one-to-many sharing) via the cloud network 130. Responsive to a successful creation and/or sharing of the personalized content, the smart device 102 may provide feedback to the user. For instance, the feedback may include activation of a light indicator, outputting a sound (e.g., beeping tone), providing haptic feedback, etc.

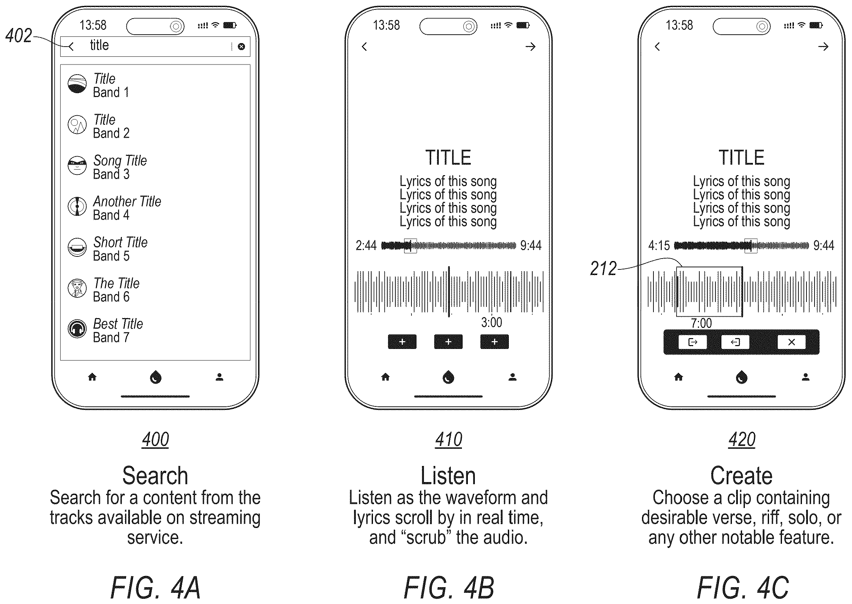

Referring to Figures 4A, 4B and 4C, interfaces for a user to search, listen and/or create a personalized content of one embodiment of the present disclosure are illustrated. With continuing reference to Figures 1-3, the interfaces may be output via the display 114 of the smart device 102.

Referring to Figure 4A, a third interface 400 allowing the user to search a multi-medium content is illustrated. The user may perform the content search from one or more tracks that are adequately licensed for the user for consumption by typing one or more search terms via a search box 402. The search terms may include any words or phrases related to the content, such as the title, author, lyrics, or the like. The search results may be displayed via the same interface 400.

Referring to Figure 4B, a fifth interface 410 allowing the user to listen a multi-medium content is illustrated. The fifth interface 410 is similar to the first interface 200 discussed with reference to Figure 2A. The audio content may be displayed as a waveform and the lyrics may scroll by in real time. The user may adjust the portion of the audio content by "scrubbing" the audio waveform by touch inputs.

Referring to Figure 4C, a sixth interface 420 allowing the user to create a personalized content is illustrated. The interface sixth 420 is similar to the first interface 200 discussed with reference to Figure 2A. The user may select a clip containing the desirable features via the sixth interface 420.

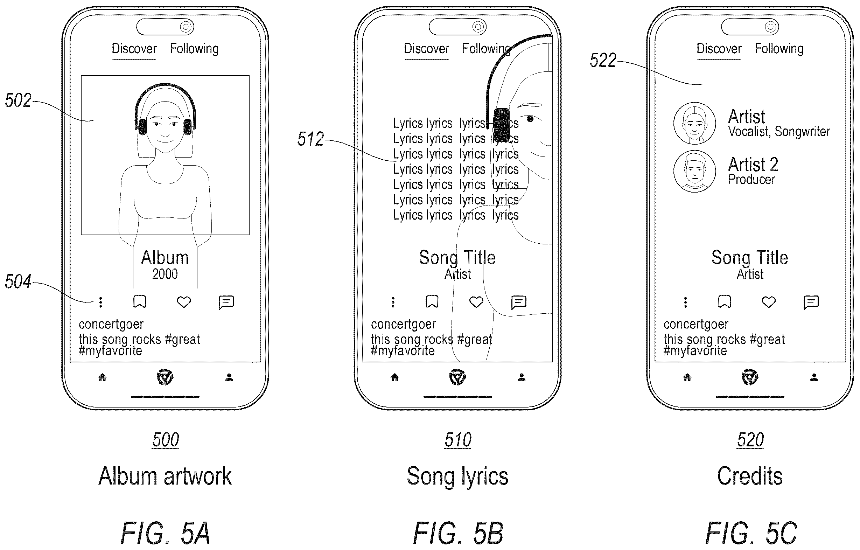

Referring to Figures 5A, 5B and 5C, interfaces for a user to receive and consume recommended content are illustrated. With continuing reference to Figures 1-4, the interfaces may be output via the display 114 of the smart device 102. The recommended content may be curated based on the user's feedback and the people he/she follows. The recommended content may include focused audio highlights, artist visuals, relevant metadata, and/or artificial intelligence (AI) powered recommendations.

Referring to Figure 5A, a seventh interface 500 including an album artwork image 502 of the recommended content is illustrated. The seventh interface 500 may further include other information such as the title and author of the recommend content below the album artwork image 502. The seventh interface 500 may further include one or more action buttons 504 configured to allow the user to perform operations to the recommended content. For instance, the action buttons 504 may allow the user to bookmark, save favorite, and message the recommended content.

Referring to Figure 5B, an eighth interface 510 including lyrics 512 of the recommended content is illustrated. Similar to the first interface 200, the lyrics text 512 may be displayed in a rolling manner via the eighth interface 510.

Referring to Figure 5C, a ninth interface 520 including credits 522 of the recommended content is illustrated. The credits 522 may include one or more people and/or entities associated with the recommended content.

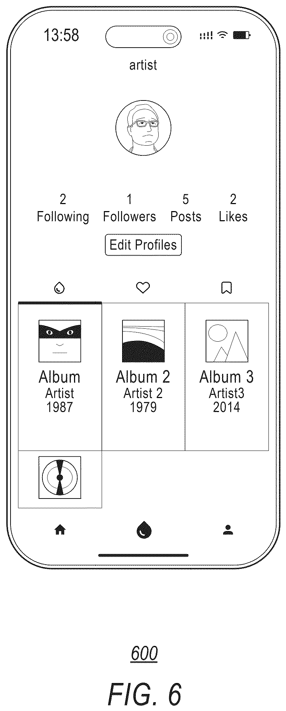

Referring to Figure 6, a tenth interface 600 for a user to interact with multi-medium content is illustrated. The tenth interface 600 is configured to provide a user experience similar to that of social media which allows the user to follow other users, make posts, and share one or more contents.

It is recognized that the controllers as disclosed herein may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, such controllers as disclosed utilizes one or more microprocessors to execute a computer-program that is embodied in a non-transitory computer readable medium that is programmed to perform any number of the functions as disclosed. Further, the controller(s) as provided herein includes a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing. The controller(s) as disclosed also include hardware-based inputs and outputs for receiving and transmitting data, respectively from and to other hardware-based devices as discussed herein.

While exemplary embodiments are described above, it is not intended that these embodiments describe all possible forms encompassed by the claims. The words used in the specification are words of description rather than limitation, and it is understood that various changes may be made without departing from the spirit and scope of the disclosure. The words processor and processors may be interchanged herein, as may the words controller and controllers.

As previously described, the features of various embodiments may be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics may be compromised to achieve desired overall system attributes, which depend on the specific application and implementation. These attributes may include, but are not limited to strength, durability, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and may be desirable for particular applications.

## Claims

1. A computing device comprising:
a display; and
at least one processor programmed to:
transmit a multimedia signal including one or more of audio and video data for output via one or more of a loudspeaker and the display;
receive a first user input via a first interface of the display, the first user input being indicative of a user selection to create personalized content including a start position and an end position corresponding to a portion of the multimedia signal;
present at least one attribute of the personalized content on a second interface for selection by a user;
associate the at least one attribute to the personalized content of the multimedia signal to provide a desired attribute in response to a second user input being received at the second interface, the second user input being indicative of selecting at the at least one attribute; and
share the desired attribute and the personalized content to another computing device that is separate from the computing device for playback thereof.

2. The computing device of claim 1, wherein the at least one processor is further programed to:
automatically select at least one attribute based on the first user input before receiving the second user input.

3. The computing device of claim 2, wherein the at least one processor is further programmed to:
responsive to detecting the first user input includes selecting lyrics of the multimedia signal at the first interface, automatically selecting the lyrics as one of the at least one attribute before receiving the second user input.

4. The computing device of claim 2 or 3, wherein the at least one processor is further programed to:
responsive to detecting the second user input, unselecting the at least one attribute that is automatically selected, refrain from automatically selecting the at least one attribute for future personalized content creations.

5. The computing device of any preceding claim, wherein the at least one processor is further programed to:
output a feedback to indicate at least one of creating the personalized content and sharing the personalized content.

6. The computing device of claim 5, wherein the feedback includes at least one of: activation of a light, outputting a sound, and providing a haptic feedback.

7. The computing device of any preceding claim, wherein the at least one attribute include at least one of: lyrics, beat, artwork, author, genre, an image supplied by the user, and a graphic created by a generative artificial intelligence (AI).

8. The computing device of any preceding claim, wherein the first interface includes a time axis, and the first user input is selected on the time axis.

9. A method comprising:
transmitting a multimedia signal including one or more of audio and video data for output via one or more of a loudspeaker and a display;
receiving a first user input via on a first interface of the display, the first user input being indicative of a user selection to create personalized content including a start position and an end position corresponding to a portion of the multimedia signal;
presenting a plurality of attributes of the personalized content on a second interface for selection by a user;
associating the plurality of attribute to the personalized content of the multimedia signal to provide a desired attribute in response to at least one of the first user input being received at the first interface, and a second user input being received at the second interface; and
sharing the desired attribute and the personalized content to an entity for playback thereof.

10. The method of claim 9, further comprising:
responsive to detecting the first user input includes selecting lyrics of the multimedia signal at the first interface, automatically selecting the lyrics as one of the at least one attribute before receiving the second user input.

11. The method of claim 10, further comprising:
responsive to detecting the second user input unselecting the lyrics attribute that is automatically selected, refrain from automatically selecting the lyrics attribute for future personalized content creations.

12. The method of any of claims 9 to 11, further comprising:
outputting a feedback to indicate at least one of creating the personalized content, and sharing the personalized content.

13. The method of claim 12, wherein the feedback includes at least one of: activation of a light, outputting a sound, and providing a haptic feedback.

14. The method of any of claims 9 to 13, wherein the first interface includes a time axis, and the first user input is made on the time axis.

15. The method of any of claims 9 to 14, wherein the attributes include at least one of: lyrics, beat, artwork, author, genre, or a graphic created by a generative artificial intelligence.
